# EUROPÄISCHE PATENTSCHRIFT

(11) **EP 0 412 338 B1**
(45) Veröffentlichungstag und Bekanntmachung des Hinweises auf die Patenterteilung: **05.05.1993**
(21) Anmeldenummer: 90113922.0
(22) Anmeldetag: 20.07.1990
(51) Int. Cl.: F16B 7/04

(54) **Gestell aus lösbar durch einen Verbinder miteinander kuppelbaren Profilstangen**
Frame consisting of detachable profiled rods interconnected by a connector
Echafaudage à barres profilées verrouilles en manière détachable par un connecteur

(30) Priorität: 11.08.1989 DE 8912297 U; 24.08.1989 DE 3927979
(43) Veröffentlichungstag der Anmeldung: 13.02.1991
(73) Patentinhaber: Gerd und Bernd Vieler KG., D-58642 Iserlohn (DE)
(72) Erfinder: Vieler, Gerd, D-5860 Iserlohn (DE)
(74) Vertreter: Mentzel, Norbert, Dipl.-Phys.

(56) Entgegenhaltungen:
- EP-A- 0 238 848
- EP-A- 0 254 287
- EP-A- 0 254 288
- DE-A- 3 343 102
- GB-A- 2 119 054

## Beschreibung

Die Erfindung richtet sich auf ein Gestell der im Oberbegriff des Anspruches 1 angegebenen Art. Es geht darum, Profilstangen durch einen Verbinder zu einem Gestell miteinander zu verbinden. Der Verbinder ist aus seinen Bestandteilen zu einer Baueinheit vormontiert und besitzt einen Exzenterbolzen, der durch eine Federbelastung der Platte über deren am Exzenterbolzen sich abstützende Anlagefläche mit seinem Bolzenkopf aus der einen Seitenwand des Gehäuses normalerweise vorspringt. Dieser Bolzenkopf ist aber druckknopfartig gegen die Federbelastung axial ins Gehäuse eindrückbar, um den Verbinder im Hohlraum seiner Profilstange montieren bzw. demontieren zu können. Die Profilwand der Profilstange ist nämlich mit einer passenden Querbohrung versehen, in welcher der Bolzenkopf im Montagefall unter der Wirkung der Federbelastung der Platte einschnappt. Die Demontage des Verbinders aus der Profilstange vollzieht sich analog, im umgekehrten Sinne. Der Exzenterbolzen hat hier also die weitere Funktion einer bequemen und schnellen "Druckknopf-Montage" des fertigen Verbinders mit seiner Profilstange. Der Bolzenkopf des so montierten Verbinders ist durch die Querbohrung in der Profilstange stirnseitig zugänglich und kann als Drehhandhabe des Exzenterbolzens dienen, um die profilierte Platte über die Exzenterscheibe zwischen einer kupplungslösenden Ausschublage und einer kupplungswirksamen Einschublage zu überführen.

Das bekannte Gestell mit einem Verbinder dieser Art (DE-C-31 53 232) hat sich zwar bewährt, doch blieben in der Praxis Wünsche nach einer verbesserten Kupplung der Profilstangen und einer sichereren Position des montierten Verbinders in der Profilstange offen. Dieser bekannte Verbinder besaß eine profilierte Platte mit nur einem Haken. Dieser Verbinder brachte zwar den großen Vorteil der vorgenannten Druckknopf-Montage über seinen Exzenterbolzen, aber in der Einschublage der Platte konnte der Haken nur die eine der beidseitig der Nut befindlichen Nutwände hintergreifen. Dadurch lag eine nur einseitige Kupplung zwischen den beiden Profilstangen vor. Die Federbelastung der Platte bestand aus einem damit einstückigen abgewinkelten Streifen, griff aber im Bereich des äußeren Plattenendstücks an, um die für die spätere Querbewegung des Hakenkopfes dienende Schrägfläche der Platte gegen die im Gehäuse vorgesehene Berührungsstelle anzudrücken. Folglich war die am gegenüberliegenden Innenende der Platte über deren Anlagefläche auf den Exzenterbolzen ausgeübte Federkraft nur eine Teilkraft davon und führte im Montagefall zu einer unbefriedigenden Einschnapp-Position des Bolzenkopfs in der Querbohrung der Profilstange.

Bei einem Verbinder anderer Art (DE-C-22 39 370) war es bekannt, zwei Platten nebeneinander im Gehäuse anzuordnen und durch einen gemeinsamen Exzenterbolzen gleichzeitig zwischen einer Ausschub- und Einschublage zu bewegen. Obwohl sich die beiden Platten mit ihren äußeren Endstücken berührten, ergab sich eine große Baubreite wegen der additiv zueinander hinzukommenden Hakenköpfe und Schrägflächen. Die beiden Platten hatten zwar einander entgegengerichtete Haken, mit denen sie bei Platten-Einschub beide, die Nutöffnung begrenzende Nutwände hintergreifen konnten, doch war eine Druckknopf-Montage des Verbinders über einen Exzenterbolzen weder vorgesehen noch möglich. Eine Übertragung dieser Maßnahmen auf Gestelle mit Verbindern der im Oberbegriff angegebenen Art erschien unmöglich, weil die mit den beiden Haken ausgerüsteten äußeren Endstücke der beiden Platten eine zueinander gegensätzliche Federbelastung erforderten, um die beiden Platten im Kontakt mit einem zwischen ihren beiden Schrägflächen liegenden Zapfen gegeneinandergedrückt zu halten. Der Zapfen diente als gemeinsame Berührungsstelle der beiden Platten.

Der Erfindung liegt die Aufgabe zugrunde, ein Gestell der im Oberbegriff angegebenen Art zu entwickeln, das sich durch eine verbesserte Kupplung der Profilstangen mit hoher Festhaltekraft auszeichnet, eine zuverlässige Druckknopf-Montage des Verbinders über seinen Exzenterbolzen ermöglicht sowie einen schnellen Zusammenbau eines kompakten Verbinders gestattet. Dies wird erfindungsgemäß durch die im Kennzeichen des Anspruches 1 angeführten Maßnahmen erreicht, denen folgende besondere Bedeutung zukommt:

Durch den Längsschlitz ist die Platte nur in ihrem vor der Anlagefläche liegenden Bereich in zwei Plattenzungen gegliedert. Die Plattenzungen sind zueinander gegensätzlich verkröpft und weisen voneinander wegweisende Haken auf, die, in der Einschublage der längsgespaltenen Platte, beide Nutwände der Nut der anderen Profilstange hintergreifen. Es ergibt sich daher eine symmetrische Kupplung der beiden Profilstangen mit großer Eingriffssicherheit und hoher Belastbarkeit. Dennoch liegt eine minimale Baubreite des Verbinders vor, denn die beiden Plattenzungen liegen, in Nutverlaufsrichtung gesehen, bereichsweise übereinander und es bedarf im Inneren des Gehäuses nur so viel Platz, wie zum Querbewegen der einzelnen Plattenzungen erforderlich ist. Entscheidend ist aber, daß im Anlagebereich des Exzenterbolzens für beide Plattenzungen eine gemeinsame Anlagefläche vorliegt, die im Ausschubsinne des Bolzenkopfs federbelastet ist. Damit ist der große Vorteil der Druckknopf-Montage des erfindungsgemäßen Zwei-Haken-Verbinders ohne weiteres möglich, denn im Bereich der Anlagefläche liegt die Funktion eines Ein-Haken-Verbinders vor. Die Steuerbewegung beim Ein- und Ausschieben der beiden Plattenzungen beeinträchtigt dies nicht, weil die zueinander unterschiedlichen Querbewegungen sich nur innerhalb der Plattenzungen abspielen, während die Druckknopf-Funktion sich in der gemeinsamen Anlagefläche vollzieht, von welcher auch die Längsbewegung der beiden Haken über die Steuervorsprünge beidseitig der Exzenterscheibe ausgeht. Der Zusammenbau des erfindungsgemäßen Zwei-Haken-Verbinders ist auch insofern vereinfacht, weil, trotz der beiden Haken , nur eine einzige gemeinsame Platte zu handhaben ist.

Einbauprobleme durch ein mittiges Führungsglied zwischen den beiden Federzungen im Bereich ihrer gegenläufigen Schrägflächen sind vermieden durch zwei getrennte Berührungsstellen, an den beiden einander gegenüberliegenden Seitenwänden des Gehäuses. Im einfachsten Fall verwendet man als Berührungsstellen gegenläufigen Keilflächen zur Abstützung der beiden Schrägflächen. Dabei stützt sich die eine Plattenzunge mit ihrem verkröpften äußeren Endstück an der in Eindrückrichtung des Exzenterkopfes bei dessen Druckknopf-Montage weisenden Berührungsstelle im Gehäuse ab und führt beim Eindrücken des Bolzenkopfs eine federnd nachgiebige Bewegung aus. Diese Plattenzunge trägt somit aufgrund der Federelastizität ihres Plattenmaterials additiv zur Federbelastung der Anlagefläche an der Exzenterscheibe bei, fördert damit das Herausdrücken des Bolzenkopfs aus dem Gehäuse und unterstützt die sichere Eingriffslage des Bolzenkopfs in der Querbohrung der Profilstange.

Die zueinander gegensinnige Arbeitsweise der Plattenzungen läßt sich am einfachsten durch die in Anspruch 2 hervorgehobene spiegelbildliche Ausbildung ihrer Endstücke erreichen, die vorteilhaft symmetrisch bezüglich einer Längsmittenebene des Gehäuses ausgebildet sein sollte. Weil sich die Endstücke dabei in Platten-Ausschublage überkreuzen, erhält man trotz der beiden zueinander gegensinnig verkröpften Hakenköpfe eine sehr schlanke Bauweise in der Platten-Ausschublage, denn die Hakenköpfe, Hakenschäfte und Schrägflächen-Abschnitte der beiden übereinanderliegenden Zungen können sich in Nutverlaufsrichtung weitgehend überdecken. Im Idealfall erhält man für beide Haken nur eine Baubreite, wie sie durch die Dimensionen eines einzelnen Hakens erforderlich ist. Trotz ihrer beiden einander entgegengerichteten Haken hat der erfindungsgemäße Verbinder auch im Bereich seiner beiden Haken nur eine Baubreite, die derjenigen eines Ein-Haken-Verbinders entspricht. In Nutverlaufsrichtung gesehen haben die beiden Plattenzungen zueinander einen spiegelbildlichen S-Verlauf der durch die Überkreuzung das Profil einer schlanken "Ziffer 8" vor dem gemeinsamen Anlageflächen-Abschnitt für die Exzenterscheibe erzeugt. Die beiden Längsabschnitte können dabei durch Kuppen an den Keilflächen der beiden Gehäuse-Seitenflächen geführt werden und durch Auflauf der Hakenschäfte schließlich zu einer Sicherung der Einschublage der beiden Plattenzungen dienen.

Sofern man die Federbelastung des gemeinsamen Anlageabschnitts durch einen aus dem Plattenmaterial abgewinkelten Streifen nach Anspruch 3 bis 6 erzeugt, läßt sich ein sonst erforderliches gesondertes Federelement einsparen. Der Aufbau des Verbinders ist sehr einfach, weil er nur drei Bestandteile umfaßt, nämlich ein Gehäuse, einen in den federnden Streifen und die beiden Plattenzungen gegliederten einheitlichen Plattenkörper und den Exzenterbolzen. Wegen dieser wenigen Bestandteile ist der Zusammenbau des Verbinders schnell ausführbar.

Beim Drehen des Exzenterbolzens in die Einschublage der Platte werden so hohe Spannkräfte von der Exzenterscheibe auf den hinteren Steuervorsprung übertragen, daß dort Deformationen eintreten können, die ein Abspringen der Exzenterscheibe verursachen können. Sofern Materialfehler vorliegen oder wenn nach einer Langzeitbelastung eine Materialermüdung eintritt, kann sogar ein als Steuerfläche für den Exzenterbolzen dienender hinterer Steuervorsprung brechen. Dadurch ist die Funktionssicherheit des Schlosses gefährdet und im Extremfall der Verbinder sogar unbrauchbar gemacht. Durch eine Schlaufe nach Anspruch 7 wird nun der hintere Steuervorsprung wesentlich verstärkt, ohne daß dadurch ein nennenswerter Mehraufwand an Material und eine umständlichere Herstellung erforderlich wäre. Die Schlaufe kann dabei, gemäß Anspruch 16, so flach ausgebildet sein, daß sie den Ein-und Ausbau des Verbinders nicht behindert und bei der Längsbewegung der Platte eine Führung im Gehäuse oder im Inneren der Profilstange erfährt.

Eine hohe Funktionssicherheit ergibt sich, wenn man die Schlaufe, gemäß Anspruch 8, ringförmig schließt. Bei Spannkräften stößt nämlich der Schlaufenschenkel an eine Laibungskante im Durchbruch und gewinnt dadurch eine enorme Steigerung seiner Festigkeit trotz eines verhältnismäßig dünnen Plattenmaterials. Ein Durchbruch nach Anspruch 9 ist ohnehin zur Durchführung des Exzenterbolzens in der Platte nötig. Der Schlaufenschenkel sollte dabei parallel zur Drehachse des Exzenterbolzens verlaufen und gestreckt ausgebildet sein sowie rechtwinklig zur Platte verlaufen, wie es Anspruch 11 vorschlägt. Schon aus Sicherheitsgründen wird man den Schlaufenschenkel die Platte kreuzen und auf der gegenüberliegenden Seite weiterlaufen lassen.

Es besteht die Gefahr, daß in Platten-Einschublage oder bereits bei der Überführung in diese der hintere Steuervorsprung von der Exzenterscheibe abspringt. Um dies zu verhindern ist, gemäß Anspruch 12, ein gehäusefester Anschlag vorgesehen, an welchem, von Beginn der Einschubbewegung an, das innere Plattenendstück geführt ist und dadurch das Eindrücken des Exzenterbolzens ausschließt. Eine solche Blockade kann durch einen verlängerten Schlaufenschenkel erfolgen, wie es Anspruch 13 vorschlägt. Bereits die Seitenwand des Gehäuses solche Anschlagwirkung übernehmen.

Dreht man den Exzenterbolzen durch ein Drehwerkzeug od. dgl. aus der Platten-Ausschublage in eine kupplungswirksame Einschublage, so besteht die Gefahr, daß versehentlich ein zu hoher axialer Druck ausgeübt wird, der den Bolzenkopf ganz oder teilweise aus der Querbohrung der Profilstange ins Gehäuseinnere eindrückt. Dies kann selbst dann vorkommen, wenn ein Auflaufbock im Gehäuse die vorerwähnte Blockade des inneren Plattenendes übernehmen soll. Bei solcher axialer Druckausübung könnte nämlich das innere Plattenende vor den Auflaufbock stoßen und für die betätigende Person eine scheinbare Blockade des Exzenters vortäuschen, obwohl die kupplungswirksame Platten-Einschublage noch nicht vorliegt. Dieser Fall birgt ein hohes Unfallrisiko. Es ist möglich, durch die in Anspruch 15 erwähnte Aussparung bereits bei einer minimalen Verschiebung von ca. nur 0,1 mm die ordnungsgemäße Anlage der Exzenterscheibe am inneren Plattenende zu sichern. Dann ist bereits bei Drehbeginn ein Abspringen des Exzenterbolzens von der Platte grundsätzlich verhindert. Eine versehentliche Eindruckbewegung des Exzenterbolzens und damit die Gefahr einer Demontage des Verbinders aus der Profilstange sind dann ausgeschlossen.

Weitere Vorteile und Maßnahmen nach der Erfindung ergeben sich aus der nachfolgenden Beschreibung und den Zeichnungen. Die Erfindung richtet sich dabei auf alle daraus entnehmbaren neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:
- Fig. 1: die längsgeschnittene Seitenansicht durch eine Verbindungsstelle des erfindungsgemäßen Gestells längs der Schnittlinie I-I von Fig. 2, noch bevor die beiden Profilstangen miteinander gekuppelt sind,
- Fig. 2: A bzw. 2 B die Draufsicht auf die längs der Schnittlinien II A bzw. II B von Fig. 1 geschnittenen Verbindungsstelle in Entkupplungsstellung,
- Fig. 3 und 4: in starker Vergrößerung die Seitenansicht bzw. Draufsicht auf einen wesentlichen Bestandteil des an der Verbindungsstelle genutzten Verbinders,
- Fig. 5: in Vergrößerung eine Detailansicht des in Fig. 2 A bzw. 2 B gezeigten Verbinders,
- Fig. 6: eine der Fig. 2 A entsprechende Draufsicht auf den Verbinder, wenn sich dessen Bauteile in einer Demontagestellung befinden, die einen Ein- und Ausbau des Verbinders in eine Profilstange gestattet,
- Fig. 7: in einer der Fig. 2 A entsprechenden Schnittansicht die Kupplungsstellung der beiden Profilstangen an dieser Verbindugnsstelle und
- Fig. 8: in starker Vergrößerung eine endseitige Querschnittansicht durch die Verbindungsstelle von Fig. 7 längs der dortigen Schnittlinie VIII-VIII.

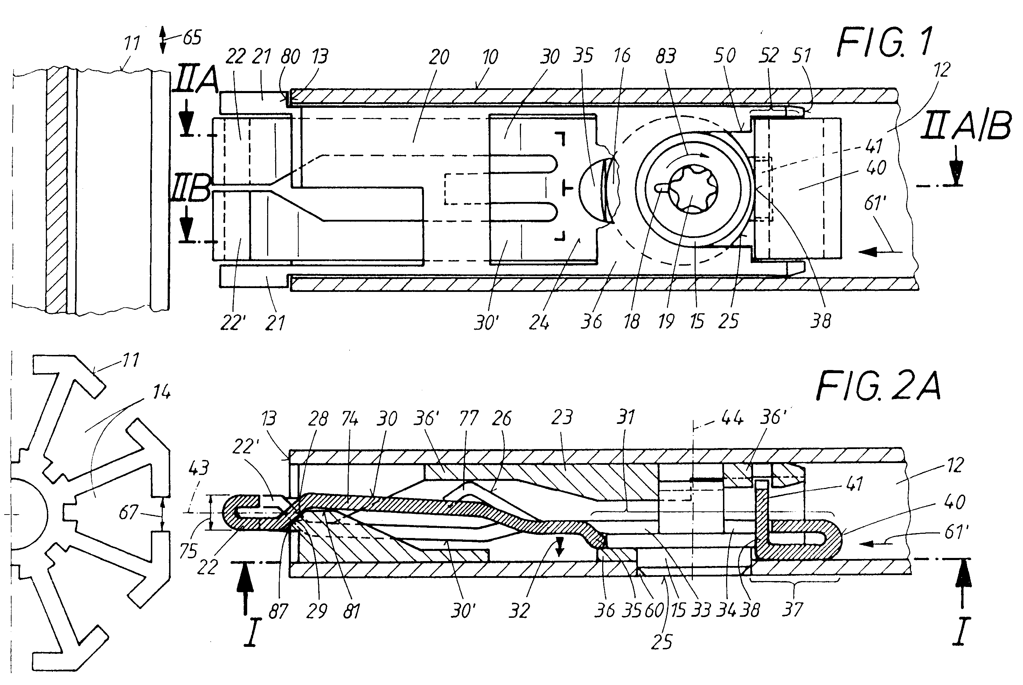

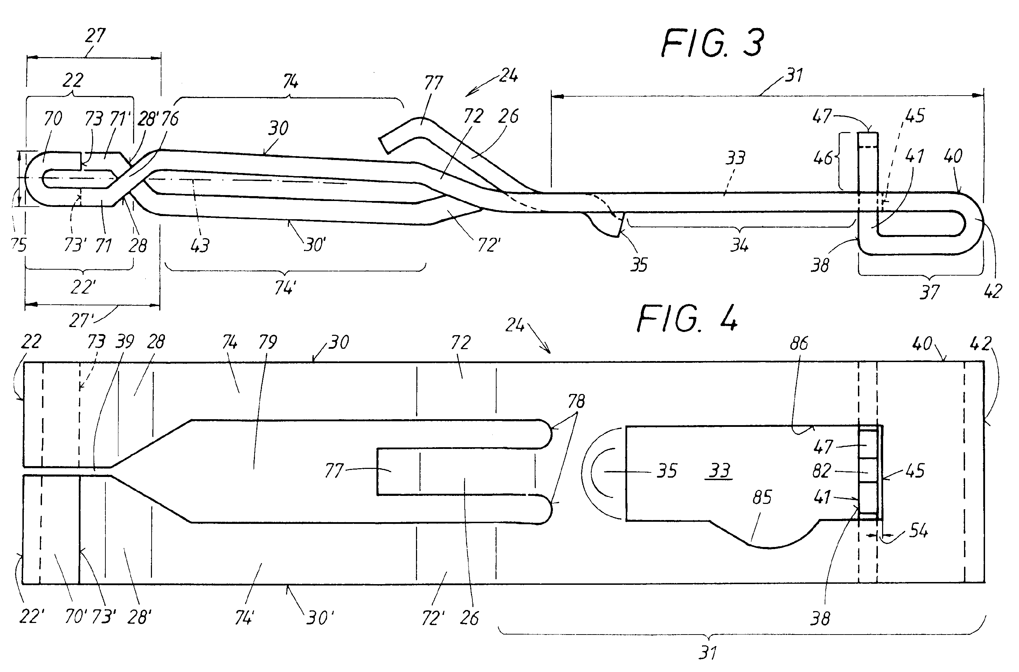

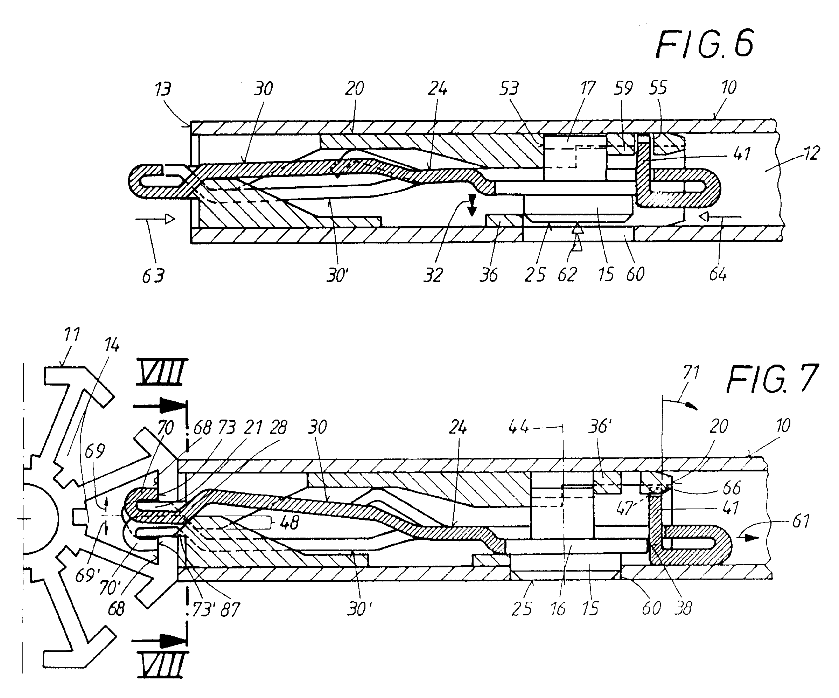

Durch einen Verbinder 20 sollen Profilstangen 10, 11 zu einem erfindungsgemäßen Gestell gekuppelt werden. Dazu wird der Verbinder 20 von der Stirnfläche 13 einer Profilstange 10 aus in einen Profil-Hohlraum 12 eingesteckt im Sinne des später im Zusammenhang mit Fig. 6 noch näher zu beschreibenden Einsteckpfeils 63, bis schließlich aus der Profilstirnfläche 13 besondere Kupplungsmittel 21, 22, 22' herausragen. Im Kupplungsfall greifen diese, wie aus Fig. 7 zu entnehmen ist, in eine hinterschnittene Nut 14 der anderen Profilstange 11, die im dargestellten Ausführungsbeispiel aus einer vertikalen, achteckigen Säule besteht. Der Verbinder 20 ist eine vorgefertigte Baueinheit, für welchen, im vorliegenden Fall, nur drei Bestandteile erforderlich sind. Dies ist ein Gehäuse 23 mit einer darin im Sinne der Bewegungspfeile 61, 61' von Fig. 2 A und 7 längsbeweglichen, profilierten Platte 24 und aus einem im Gehäuse 23 gelagerten Exzenterbolzen 25. Die Platte 24 ist in besonderer Weise ausgebildet, wie anhand der vergrößerten Darstellung von Fig. 3 und 4 in Seitenansicht und Draufsicht zu entnehmen ist.

Die Platte besteht aus einem verkröpften Blechstreifen von Federstahl. Die Platte 24 ist, ausgehend von ihrem äußeren Kupplungsmittel 22, 22' mit einem Längsschlitz 39 versehen, der sie in zwei Plattenzungen 30, 30' gliedert. Die beiden Plattenzungen 30, 30' sind zueinander gegensätzlich verkröpft, was besonders deutlich aus Fig. 3 hervorgeht und daher in diesem Bereich aus der Platte 24 zwei voneinander getrennte Lagen erzeugt. Der Längsschlitz 39 endet aber vor einem Plattenabschnitt 31 der, bis auf ein noch näher zu beschreibendes besonderes Endstück 37, einlagig bleibt. Bezugnehmend auf Fig. 1 bis 4 gibt es folgende Abschnitte in der Platte 24, denen nachgenannte Bedeutung zukommt. Das äußere Endstück 27, 27' der beiden Plattenzungen 30, 30' ist bezüglich einer strichpunktiert in Fig. 2 A und 3 angedeuteten Längsmittenebene 43 des Gehäuses 23 spiegelbildlich gleich verkröpft und umfaßt zueinander entgegengerichtete Haken 22, 22', denen sich dann jeweils ein Abschnitt 28, 28' mit Schrägflächen anschließt. In der Ausgangsstellung von Fig. 2 A und 2 B befindet sich die Platte 24 in ihrer kupplungsunwirksamen Stellung; sie ist im Sinne des Ausschubpfeil 61' maximal aus dem Gehäuse 23 ausgefahren und ragt daher entsprechend weit aus der Profilstangen-Stirnfläche 13 heraus. Diese Stellung soll daher "Ausschublage" der Platte 24 benannt werden. In dieser Ausschublage kreuzen sich die beiden Schrägflächen-Abschnitte 28, 28' in ihrer Mitte, bevor die beiden Zungen 30, 30' in zwei in Verschiebungsrichtung der Pfeile 61 bzw. 61' im wesentlichen weisende Längsabschnitte 74, 74' übergehen, die zwar beidseitig der erwähnten Längsmittenebene 43 liegen, aber nicht mehr dazu spiegelbildlich gleich verlaufen brauchen. Dadurch ergeben sich auch entsprechend unterschiedliche Knickwinkel in sich daran anschließenden Knickabschnitten 72, 72' der beiden Zungen, die schließlich in den bereits erwähnten im wesentlichen ebenen restlichen Plattenabschnitt 31 übergehen.

Die beiden Haken 22, 22' sind aus gegensinnig zueinander verlaufenden, U-förmig rückgebogenen Zungenenden gebildet, deren beide U-Schenkel 70, 71 bzw. 70', 71' in der Draufsicht von Fig. 2 A bzw. 3 genau fluchtend übereinander liegen, solange die Platten-Ausschublage vorliegt. Der jeweils freie U-Schenkel erzeugt den Hakenkopf 70, 70' und liegt dabei in vertikaler Überdeckung zu dem vom anderen U-Schenkel gebildeten Hakenschaft 71', 71. Trotz der beiden Haken 22, 22' ist in Ausschublage 61' eine Baubreite 75 verwirklicht, die nur von der Schenkelbreite eines einzelnen U-Hakens bestimmt ist. Diese Schenkelbreite 75 ist etwas enger als die Öffnungsweite 67 der Nut 14 der damit zu verbindenden anderen Profilstange 11 ausgebildet. Die kupplungswirksamen Stellen der beiden U-Haken 22, 22' sind die Schenkel-Stirnenden 73, 73', was im Zusammenhang mit Fig. 7 noch näher beschrieben werden wird. Die beiden erwähnten Längsabschnitte 74, 74' der beiden Plattenzungen 30, 30' liegen aufgrund der dazwischenliegenden Schrägabschnitte 28, 28' annähernd in Ausrichtung mit dem jeweils zugehörigen freien U-Schenkel 70 bzw. 70', wodurch die beiden Zungen 30, 30', jeweils einen S-Verlauf aufweisen. Wegen der erwähnten zueinander spiegelbildlichen Kröpfung überkreuzen sich aber diese beiden S-Verläufe 70, 71, 28, 74, 72 einerseits und 70', 71', 74', 72' andererseits an dem in Fig. 3 mit 76 bezeichneten Kreuzungspunkt, weshalb sich in dieser Ausschublage das Profil der "Ziff. 8" im Bereich der beiden Plattenzungen 30, 30' ergibt.

Bei zusammengebautem Exzenter muß der innere Plattenabschnitt 31 einer Federbelastung im Sinne des Pfeils 32 ausgesetzt sein, die über die bereits erwähnte Anlagefläche 34 gegen eine am Exzenterbolzen 25 befindliche Exzenterscheibe 16 drückt und diese gegen die eine Seitenwand 36 des Gehäuses 23 gedrückt hält. Eine solche Federkraft 32 könnte von einem gesonderten Federglied ausgehen, das als eine den Exzenterbolzen 25 umschließende Druckfeder sich zwischen der hinteren Gehäusewand 36' und dem Plattenabschnitt 31 abstützt. Im vorliegenden Fall ist aber der Federstahl der Platte 24 dazu benutzt und damit einstückig ein federnder Streifen 26 ausgeformt, der sich mit seinem freien Ende 77 gleitfähig an der Innenfläche der hinteren Gehäuse-Seitenwand 36' gemäß Fig. 2 A abstützt. Dazu ist der erwähnte Längsschlitz 39 im Bereich der beiden Längsabschnitte 74, 74' der Plattenzungen 30, 30' mit einer Erweiterung 79 versehen, die zum Ausformen des mittigen Streifens 26 im Schlitzgrund 78 ausreicht. Der federnde Streifen 26 sitzt also unmittelbar an dem einlagigen Plattenabschnitt 31 und verläuft mit seinem freien Streifenende 77 auf die beiden Haken 22, 22' zu. Abgesehen von dem stärkeren Knickwinkel an seiner fußseitigen Ansatzstelle bei 78 erstreckt sich der federnde Streifen 26, wie eine "dritte Zunge" zu mit den Haken ausgerüsteten Plattenzungen 30, 30'. Der federnde Streifen 26 verläuft somit im Sinne des bereits mehrfach erwähnten Ausschub-Pfeils 61' gegen die Profil-Stirnfläche 13.

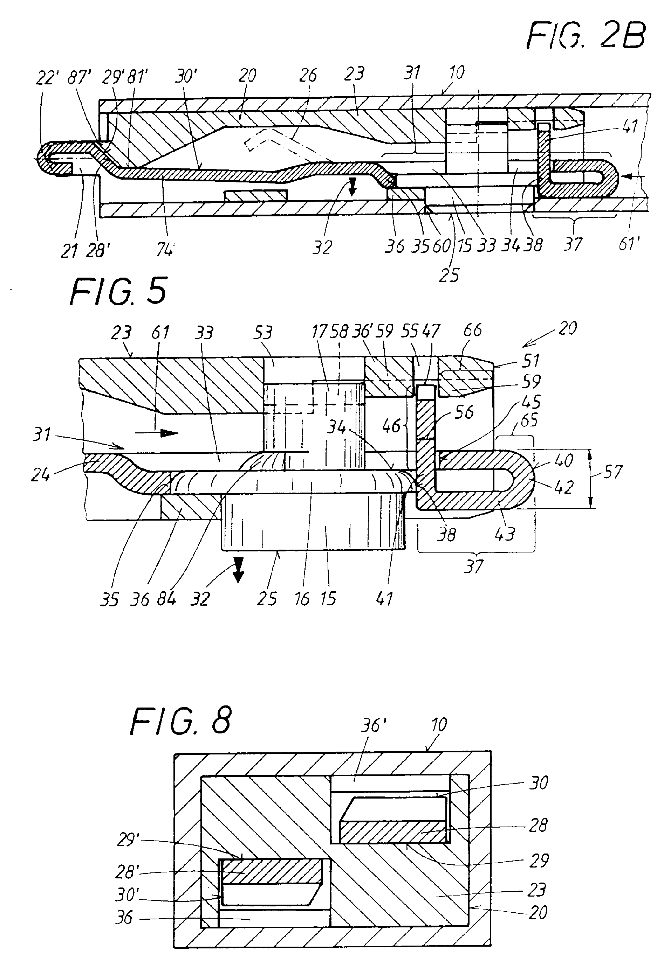

Damit kommt die erwähnte Federbelastung 31 primär an der Anlagefläche 34 zur Wirkung und sorgt über die von ihr beaufschlagte Exzenterscheibe 16 dafür, daß der in Richtung der Exzenterdrehachse 44 davor liegende Bolzenkopf 15, wie auch aus Fig. 5 zu erkennen ist, über die Begrenzung der vorderen Gehäuse-Seitenwand 36 herausgedrückt wird. Der Plattenabschnitt 31 umfaßt zunächst einen Durchbruch 33, der vom Exzenterbolzen 25 durchsetzt wird und hier im wesentlichen aus einem Langloch besteht. Beidendig des Durchbruchs 33 befinden sich Steuervorsprünge 35, 38, welche die Anlagefläche 34 zwischen sich einfassen und überragen. Zwischen diesen Steuervorsprüngen 35, 38 liegt dann die Exzenterscheibe 16. Der Steuervorsprung 35 besteht aus der Kante einer im Randbereich des Durchbruches 33 herausgedrückten Delle, während die andere Steuerkante 38 im dargestellten Beispiel von besonderer Beschaffenheit ist und weil durch mehrfache Abwinkelungen des inneren Platten-Endstücks 37 eine rückgebogene Schlaufe 40 entsteht. Hinter dem Druchbruch 33 läuft zunächst der Plattenabschnitt 31 eben weiter und bildet dann einen Schlaufenscheitel 42, worauf das Plattenmaterial wieder zurückläuft und dann, über eine L-förmige Abwinkelung, in einen etwa rechtwinkelig zur Anlagefläche 34 verlaufenden Endschenkel 41 übergeht, der nachfolgend kurz "Schlaufenschenkel 41" bezeichnet werden soll. Die Zone 38 des Schlaufenschenkels 31, welche die Anlagefläche 34 überragt, fungiert als der hintere Steuervorsprung für die Exzenterscheibe 16.

Zum Zusammenbau des Verbinders 20 wird zunächst der Exzenterbolzen 25 mit seinem Lagerzapfen 17 von der Anlagefläche 34 aus durch den Durchbruch 33 in der Platte 24 hindurchgeführt und diese beiden Bauteile durch die Öffnung im inneren Gehäuseende 51 gemäß Fig. 5 ins Gehäuseinnere eingeführt, bis der zylindrische Bolzenkopf 15 in den halbkreisförmigen Grund eines Wandausschnitts 50 gelangt. Der Wandausschnitt 50 geht zum Gehäuse-Innenende 51 hin in eine Erweiterung 52 über, in welche die Schlaufe 40 einfährt. Bei diesem Zusammenbau gelangt der zylindrische Lagerbolzen 17 in der hinteren Gehäuseseitenwand 36' in eine Lagerbohrung 53, die ihn halbkreisförmig umschließt. An der gegenüberliegenden Seite stützt sich dann der Lagerzapfen 17 an einer Führungsrippe 59 ab, die an der hinteren Gehäuse-Seitenwand 36' angeformt ist und zur ausgerichteten Einführung des Exzenterbolzens 25 beim Zusammenbau des Verbinders 20 dient. Dazu ist der Exzenterbolzen 25 mit einer diametralen Rinne 58 an der Stirnfläche seines Lagerzapfens 17 versehen, die beim Zusammenbau des Verbinders über die Führungsrippe 59 gleiten kann. Im zusammengebauten Zustand liegt die beschriebene Flächenberührung zwischen der von der Anlagefläche 34 im Sinne der Federkraft 32 federbelasteten Exzenterscheibe 16 an der Innenfläche der vorderen Gehäuse-Seitenwand 36 vor. Dies ist die Anschlagstellung für den erwähnten Bolzenkopf 15 in seiner aus Fig. 5 ersichtlichen herausgedrückten Position. An der Stirnfläche besitzt der Bolzenkopf 15 sowohl eine axiale Werkzeugaufnahme 19 als auch eine seine maximale Exzentrizität kennzeichnende Marke 18. Anhand der Marke 18 kann die jeweilige Drehposition des Exzenterbolzens 25 erkannt werden. Nach dem geschilderten Zusammenbau weist diese Marke 18 gegen die beiden Haken 22, 22' hin. Es liegt die bereits mehrfach erwähnte volle Ausschublage 61' der Platte 24 vor. Nur in dieser Position läßt sich der Verbinder 20 schnell und bequem in seine Profilstange 10 ein- bzw. ausbauen, was anhand von Fig. 6 näher erläutert wird.

Dazu wird, gegen die Federbelastung 32, ein Druck im Sinne des Pfeils 62 auf den Bolzenkopf 15 ausgeübt. Dadurch weicht der Exzenterbolzen druckknopfartig ins Gehäuseinnere aus, denn hinter der Stirnfläche des Lagerzapfens 17 ist in der Lagerbohrung 53 noch axialer Freiraum. Wie aus Fig. 5 zu erkennen ist, erzeugt der Schlaufenschenkel 41 nicht nur den erwähnten Steuervorsprung 38 für die Exzenterscheibe 16, sondern greift in den Plattendurchbruch 33 hinein und setzt sich, im vorliegenden Fall, sogar auf der gegenüberliegenden Plattenseite in einer Schenkelverlängerung 46 fort. Der Schlaufenschenkel 41 befindet sich mit seiner endseitigen Stirnfläche 47 nahe an die Innenfläche der hinteren Gehäuse-Seitenwand 36'. Die Stirnfläche 47 besitzt einen aus Fig. 4 ersichtlichen Ausschnitt 82, der die mittige Führungsrippe 59 an der Innenfläche der Gehäuse-Seitenwand 36' mit Spiel umgreift. Zum Durchführen der Schenkelverlängerung 46 durch den Durchbruch 33 ist diese gegenüber der sonstigen Plattenbreite schmaler ausgebildet. In der Ausschublage von Fig. 6 befindet sich nun eine als Loch in der Seitenwand 36' ausgebildete Aussparung 55 in Ausrichtung mit der Schenkelstirnfläche 47, weshalb, gemäß Fig. 6, die Eindrückbewegung 62 des Exzenterbolzens 25 möglich ist. Weil der Bolzenkopf 15 in dieser Eindrückposition 62 nicht mehr über den äußeren Umriß des Lagergehäuses 23 herausragt, kann der Verbinder 20 zur Montage in der Profilstange 10 im Sinne des Einsteckpfeils 63 von Fig. 6 durch die Profilstirnöffnung 13 eingefahren werden, bis der Bolzenkopf 15 in Ausrichtung mit einer Querbohrung 60 in der Wand der Profilstange 10 gelangt. Liegt diese Ausrichtung vor, so drückt die Federbelastung 32 den Bolzenkopf 15 wieder in seine Ausgangsstellung, in welcher er von selbst in eine Querbohrung 60 der Profilstange 10 einschnappt, die in Fig. 2 A gezeigt ist. Damit liegt eine definierte Einbautiefe des Verbinders 20 in der Profilstange 10 vor.

Am Gehäuse 20 befinden sich gehäusefeste Kupplungsmittel in Form eines Nasen-Paares 21, 21. Diese Nasen 21 stoßen im Montagefall mit einer hinteren Absatzfläche 80 vor die bereits mehrfach erwähnte Profil-Stirnfläche 13. Die Nasen 21 sind breitenmäßig entsprechend der vorerwähnten Baubreite 75 eines einzelnen Hakens 22 bzw. 22' ausgebildet, weshalb sie in der aus Fig. 2 A erkennbaren Draufsicht in Nutverlaufsrichtung 65 von Fig. 1 durch die beiden Haken 22, 22' überdeckt sind. Die beiden Nasen 21 halten die beiden Haken 22, 22' längsgestaffelt zwischen sich. In der Ausschublage gemäß Fig. 1 und 2 A wird die so mit dem Verbinder 20 ausgerüstete Profilstange 10 durch die Nutöffnung 67 ins Innere der Nut 14 eingesteckt, wobei die beiden Nasen 21 an den Laibungen der beidseitigen Nutwände anliegen und die ein unerwünschtes Verkanten der Profilstange 10 bezüglich der Säule 11 ausschließen.

Die Federbelastung 32 wirkt aber nicht nur auf den Exzenterbolzen 25, sondern auch auf die Plattenzunge 30. In Ausschublage gemäß Fig. 2 A wird dadurch die Schrägfläche 28 gegen eine als Keilfläche 29 ausgebildete Berührungsstelle im Gehäuse 23 angedrückt gehalten. Die Keilfläche 29 geht dabei in eine flache Kuppe 81 über, die etwa parallel zum bereits beschriebenen Längsabschnitt 74 dieser Plattenzunge 30 verläuft. Dadurch ist die vorbeschriebene definierte Ausrichtlage des Hakens 22 in der Platten-Ausschublage 61' gesichert. Die vorerwähnten Kupplungsmittel 21, 22 liegen fluchtend und weisen, gemäß Fig. 2 A, eine schlanke Baubreite 75 auf, die sich, wie bereits erwähnt wurde, aus der Schenkelbreite 75 von Fig. 3 ergibt. Die entsprechende definierte Lage liegt auch, wie Fig. 2 B zeigt, bei der anderen Plattenzunge 30' vor.

Auch hier liegt die entsprechende Schrägfläche 28' an einer als Keilfläche 29' ausgebildeten Berührungsstelle des Gehäuses 23, die ebenfalls in eine flache Kuppe 81' übergeht, die etwa parallel zum dortigen Längsabschnitt 74' verläuft. Dadurch nimmt auch der dortige Haken 22' in Platten-Ausschublage 61' die mehrfach erwähnte ausgerichtete Vertikalposition zwischen den beiden Nasen 21 ein. Bei dieser Abstützung 28', 29' übt aber die Plattenzunge 30' aufgrund der Federeigenschaften ihres Plattenmaterials eine zusätzliche Kraftkomponente auf die Federbelastung 32 aus, die zu derjenigen des auch in Fig. 2 B angedeuteten federnden Streifens 26 hinzutritt. Dadurch wird der Bolzenkopf 15 besonders sicher in der Profilstangen-Querbohrung 60 eingedrückt gehalten. Die Montagelage der Teile 20, 10 ist damit besonders zuverlässig gesichert.

Zur Verbindung der mit dem Verbinder 20 ausgerüsteten Profilstange 10 mit der anderen Profilstange 11 erfolgt, indem man, in der Ausschub-Lage 61' von Fig. 2 A die beiden Haken 22, 22' sowie die beiden Nasen 21 durch die Nutöffnung 67 ins Nutinnere einsteckt. Der Bolzenkopf 15 mit seiner Werkzeugaufnahme 19 ist dann durch die Querbohrung 60 der Profilstange 10 zugänglich. Es wird ein Drehwerkzeug, wie ein Steckschlüssel, eingeführt und eine Drehung im Sinnes des Drehpfeils 83 von Fig. 1 eingeleitet. Dann beginnt sich die Exzenterscheibe 16 über den hinteren Steuervorsprung 38 die Platte im Sinne des Einschubpfeils 61 von Fig. 7 nach innen zu bewegen. Bereits nach einem kleinen Verschiebungsweg, von z. B. nur 0,1 mm, ist der Schlaufenschenkel 41 mit seiner Stirnfläche 47 nicht mehr in Ausrichtung mit der Gehäuseöffnung 55, sondern schon etwas über das angrenzende Wandenstück 66 gefahren. Die Gehäuseöffnung 55 besitzt nämlich in Schubrichtung 61 lediglich eine Öffnungsweite, die der aus Fig. 5 ersichtlichen Plattendicke 56 entspricht. Bereits nach einer kleinen Verschiebung ist die Lage des Plattenabschnitts 31 im Gehäuse 23 gesichert. Die Exzenterscheibe 16 kann nicht von dem als hinterer Steuervorsprung 38 fungierenden Schlaufenschenkel 41 abspringen. Es liegt stets eine Flächenberührung zwischen der Exzenterscheibe 16 und der Anlagefläche 34 der Platte 24 vor. Die im Zusammenhang mit Fig. 6 erläuterte Eindrückbewegung 62 des Exzenterbolzens 25 kann nun auch nicht versehentlich geschehen. Die Demontage des Verbinders 20 von der Profilstange 10 ist daher verhindert.

Der Exzenterbolzen 25 kann bei seiner Drehung 83 einen Drehwinkel von 180° ausführen. Dazu hat die in Fig. 1 obere Wand des Gehäuses 23 einen Schlitz, damit sich der Scheibenbereich mit der maximalen Exzentrizität vom vorderen Steuervorsprung 35 bis zum hinteren Steuervorsprung 38 durchdrehen kann. Innenseitig von der Steuerscheibe 16 hat der Exzenterbolzen 25 noch den aus Fig. 5 ersichtlichen Anschlagnocken 84, der sich dabei durch die aus Fig. 4 ersichtliche einseitige Aussparung 85 des Durchbruchs 33 hindurchbewegen kann. Bei dieser Drehung 83 verschieben sich aber die beiden Haken 22, 22' nicht nur axial im Sinne des Einschubpfeils 61, sondern bewegen sich auch seitlich, weil die Schrägflächen 28, 28' der beiden Plattenzungen 30, 30' an den zugehörigen gehäusefesten Berührungsstellen 29, 29' auflaufen. Wegen des zueinander spiegelbildlichen Schrägverlaufs erfolgt aber diie seitliche Bewegung der beiden Haken 22, 22' in zueinander entgegengesetzter Richtung. Es kommt zu einem zueinander entgegengerichteten, seitlichen Versatz 69, 69' der beiden Hakenköpfe 70, 70', die sich zunehmend hinter die Innenflächen der beiden Nutwände 68 bewegen, bis schließlich, gemäß Fig. 7, ihre beiden Stirnenden 73, 73' gegen die Nutinnenfläche gedrückt werden und dadurch die Nutwand gegen die Stirnfläche 13 der sich schauseitig davon abstützenden Profilstange 10 pressen. Die beiden Kupplungshaken 22, 22' und die Profilstirnfläche 13 wirken somit wie zwei Spannbacken, welche die beiden Nutwände zwischen sich spannen. In der Spannstellung von Fig. 7 ist die Platte 24 maximal eingeschoben, weshalb diese Position als "Einschublage" der Platte 24 bezeichnet werden soll. Dies ist anhand der Marke 18 an der Stirnfläche des Bolzenkopfs 15 ersichtlich, weil diese, gegenüber Fig. 1, in die diametral gegenüberliegende Position gebracht worden ist, also zur Schlaufe 40 hin weist. In dieser Einschublage hat sich der vorerwähnte Anschlagnocken 84 vor die Kante 86 des Plattendurchbruchs 33 bewegt und stoppt damit die weitere Drehung 83 des Exzenterbolzens 25.

Sofern der Schlaufenschenkel 41 im Bereich des Plattendurchbruchs 33 an der dortigen hinteren Laibungskante 45 anliegt, wirkt die Schlaufe 40 wie ein fester Anschlag bei der Spannbewegung in Einschub-Richtung 61. In manchen Anwendungsfällen ist es aber empfehlenswert, wie Fig. 4 verdeutlicht, zwischen der Laibungskante 45 und dem Schlaufenschenkel 41 einen Spalt 54 vorzusehen. Dann kommt es aufgrund der wirkenden Kräfte bei der Einschubbewegung 61 zu einer elastischen Biegebeanspruchung des Schlaufenschenkels 41. Diese Biegebeanspruchung bestimmt dann die auf die Kupplungshaken 22, 22' einwirkende maximale Spannkraft, die durch die baulichen Dimensionen festgelegt werden kann. Eine solche definierte Spannkraft kann unzulässig hohe Belastungen vermeiden, die zu einer Beschädigung des Stangenmaterials 10, 11 führen könnte, wenn dieses z. B. aus einem verhältnismäßig weichen Material, wie Aluminium, gebildet ist.

Die Auflaufbewegung der beiden Schrägflächenabschnitte 28, 28' braucht dabei nicht im Bereich der gehäuseseitigen Keilflächen 29, 29' zu enden; vielmehr könnten bei vollem Platten-Einschub 61 die beiden Hakenschäfte 71, 71' auf die sich gehäuseseitig anschließenden flachen Kuppen 81, 81' auflaufen. Dann wäre jeweils der seitliche Versatz 69, 69' der beiden Hakenköpfe 70, 70' in voller Spannlage gesichert. Die beiden Keilflächen 29, 29' sind dabei soweit vorgesetzt, daß ihre beiden Keilspitzen 87, 87' gemäß Fig. 2 A und 2 B in den Bereich der beiden gehäusefesten Nasen 21 eingreifen. Sie tragen zur seitlichen Abstützung an den Laibungsflächen der Nutöffnung 67 im Kupplungsfall ebenso bei, wie die Nasen 21.

Natürlich ist in Einschublage 61 eine Eindrückbewegung 62 des Exzenterbolzens 25 immer noch blockiert, wie auch die ordnungsgemäße Flächenberührung zwischen dem Plattenabschnitt 31 und der Exzenterscheibe 16 gewährleistet ist. Ein Abspringen der Exzenterscheibe 16 von ihrem hinteren Steuervorsprung 38 an der Schlaufe 40 ist natürlich auch in der Ausschublage 61 ausgeschlossen. die Stirnfläche 47 des Schlaufenschenkels 41 liegt nämlich auch dann immer noch vor dem Wandendstück 66, das dann als Anschlag dient. Um den Verbinder 20 aus der Profilstange 10 demontieren zu können, muß zunächst wieder die Ausschublage 61' von Fig. 1 bzw. 2 A erreicht werden, wo wieder eine Ausrichtung des Schlaufenschenkels 41 mit dem Gehäuseloch 55 vorliegt. Dann kann erst wieder der Bolzenkopf 15 im Sinne des Pfeils 62 von Fig. 6 eingedrückt werden. Liegt die Eindruckbewegung 62 des Bolzenkopfs 15 vor, dann läßt sich der Verbinder 20 im Sinne des Pfeils 64 aus der wieder entkuppelten Profilstange 10 durch die Stirnfläche 13 aus dem Profilhohlraum 12 herausziehen.

Die schlanke Bauweise des Verbinders 20 ergibt sich gehäuseseitig dadurch, daß die am besten aus Fig. 7 ersichtliche Überlappung 48 der beiden Gehäuse-Berührungsstellen 29, 29' mit ihren Keilflächen und ebenen Kuppen 81, 81' vorliegt. Durch die Rückbiegung der Schlaufe 40 entsteht ein in sich geschlossener Ring, der in seiner Schlaufenwindung ein Flachprofil mit einer verhältnismäßig kleinen Schlaufenhöhe 57 erzeugt. Die Schlaufenhöhe 57 ist dabei so bemessen, daß die Schlaufe 40 in der genannten Ausgangsstellung über die vordere Begrenzung der Gehäuse-Seitenwand 36 nicht hinausragt. Der Schlaufenscheitel 42 kann aber ohne weiteres über das innere Gehäuse-Stirnende 51 hinausragen. Trotz der Schlaufe 40 braucht folglich das Gehäuse 23 nicht länger ausgebildet zu sein.

Die Schrägflächen 28, 28' brauchen nicht eindimensional als schräge Rampen ausgebildet zu sein, sondern könnten als zwei-dimensionale Schraubenflächen gestaltet sein. Dementsprechend wären dann die zugehörigen gehäusefesten Berührungsstellen 29, 29' als Führungsschlitze od. dgl. ausgebildet. Statt einer Ausschwenkbewegung im Sinne der beiden Pfeile 69, 69 von Fig. 7 würden dann die beiden Hakenköpfe 70, 70' eine Torsionsbewegung ausführen. Auf welchem Weg die Andrückflächen 73, 73' hinter die Innenflächen 68 der beiden Nutwände in Spannstellung gelangen, ist gleichgültig.

## Patentansprüche

1. Gestell aus Profilstangen (10, 11), die durch einen Verbinder (20) lösbar miteinander kuppelbar sind, von denen wenigstens einige (11) hinterschnittene Nuten (14) und andere einen Hohlraum (12) zur stirnseitigen Aufnahme des Verbinders (20) aufweisen,
der Verbinder (20) besteht aus einem im Hohlraum (12) steckenden Gehäuse (23), ferner aus einer darin zwischen einer Ausschub- und Einschublage längsverschieblichen (61, 61'), profilierten Platte (24) sowie schließlich aus einem die Platte (24) durchquerenden Exzenterbolzen (25), der eine Exzenterscheibe (16) besitzt,
die Platte (24) an ihrem aus der Profilstange herausragenden äußeren Plattenendstück (27) einen Haken (22) trägt, ferner eine an einer Berührungsstelle (29) im Gehäuse (23) geführte Schrägfläche (28) besitzt, die beim Platten-Einschub (61) den Haken (22) quer (69), hinter die Nutwand (68) der anderen Profilstange (11), bewegt, und schließlich ihr innerer Plattenabschnitt (31) sowohl eine Anlagefläche (34) für den Exzenterbolzen (25) aufweist, als auch Steuerflächen (35, 38) für die Exzenterscheibe (16) zur Platten-Längsbewegung (61, 61') besitzt,
wobei der Exzenterbolzen (25) über die Anlagefläche (34) des inneren Plattenabschnitts (31) quer zur Profilstange (10) federbelastet (32) ist und diese Federbelastung (32) einen als Drehhandhabe dienenden Bolzenkopf (15) des Exzenterbolzens (25) aus dem Gehäuse (23) in eine Querbohrung (60) dieser Profilstange (10) herausdrückt,
**dadurch gekennzeichnet**
daß ein Längsschlitz (39) in der Platte (24) von der Anlagefläche (34) bis einschließlich zum Außenende (27) durchläuft und in der Platte zwei im Gehäuse (23) übereinanderliegende Plattenzungen (30, 30') erzeugt,
daß die beiden Plattenzungen (30, 30') einerseits zueinander entgegengerichtete Haken (22, 22') besitzen und andererseits zueinander gegenläufige Schrägflächen (28, 28') aufweisen,
und daß die beiden im Gehäuse (23) gegenüberliegenden Seitenwände (36, 36') zwei zueinander gerichtete Berührungsstellen (29, 29') für die beiden Schrägflächen (28, 28') haben.

2. Gestell nach Anspruch 1, dadurch gekennzeichnet, daß die äußeren Platten-Endstücke (27, 27') der beiden Plattenzungen (30, 30') bezüglich einer Längsmittenebene (43) des Verbinders (20) zueinander spiegelbildlich gleich ausgebildet sind,
wobei, in Ausschublage der Platte (24) gesehen, die Plattenendstücke (27, 27') einander überkreuzende Schrägflächen (28, 28') umfassen, ferner im wesentlichen entsprechend der Öffnungsweite (67) der Nut (14) zueinander beabstandete Hakenschäfte (71, 71') besitzen und schließlich in Verlaufsrichtung (65) der Nut (14) einander im wesentlichen überdeckende Hakenköpfe (70, 70') aufweisen.

3. Gestell nach Anspruch 1 oder 2, dadurch gekennzeichnet, daß die Federbelastung (32) der Anlagefläche (34) durch einen einstückigen, abgewinkelten Streifen (26) der aus Federmaterial bestehenden Platte (24) erzeugt ist, dessen freies Streifenende (77) gleitfähig an der Innenfläche der einen Gehäuseseitenwand (36') sich abstützt.

4. Gestell nach Anspruch 3, dadurch gekennzeichnet, daß der Längsschlitz der Platte (24) im der Anlagefläche (34) zugekehrten inneren Bereich erweitert (79) ist und zur Anordnung des federnden Streifens (26) dient.

5. Gestell nach Anspruch 4, dadurch gekennzeichnet, daß der federnde Streifen (26) im Schlitzgrund (78) der Platte (24) angeformt ist und sich in Ausschubrichtung (61') der Platte (24) erstreckt.

6. Gestell nach Anspruch 1, dadurch gekennzeichnet, daß ein Längsschlitz (39) von einem Ausschnitt (79) der Platte (24) ausgeht, der einen Federstreifen (26) aufnimmt, der Längsschlitz (39) bis zum Außenende (27) der Platte (24) durchläuft und die Platte (24) in zwei im Gehäuse (23) übereinanderliegende Plattenzungen (30, 30') gliedert, die beiden Plattenzungen (30, 30') sowohl zwei zueinander entgegengerichtete Haken (22, 22') besitzen als auch zwei zueinander gegenläufige Schrägflächen (28, 28') aufweisen, deren Berührungsstellen (29, 29') an den beiden im Gehäuse (23) gegenüberliegenden Wänden (36, 36') sich befinden, wobei der im Ausschnitt (79) befindliche Federstreifen (26) am einteiligen inneren Plattenabschnitt (31) der Platte (24) sitzt und mit seinem freien Streifenende (77) zu den beiden Haken (22, 22') hin gerichtet ist.

7. Gestell nach einem der Ansprüche 1 bis 6, dadurch gekennzeichnet, daß das innere Endstück (31) der Platte (24) zu einer Schlaufe (40) rückgebogen ist und einen quer zur Platte (24) verlaufenden Schlaufenschenkel (41) bildet, der die Anlagefläche (34) der Platte (24) begrenzt und als hintere Steuerfläche (38) für die Exzenterscheibe (16) dient.

8. Gestell nach Anspruch 7, dadurch gekennzeichnet, daß die Schlaufe (40) in sich ringförmig geschlossen ist und ihr Schlaufenschenkel (41) in einen Durchbruch (33) der Platte (24) hineinragt.

9. Gestell nach Anspruch 8, dadurch gekennzeichnet, daß der Durchbruch (33) zugleich zum Durchtritt des Exzenterbolzens (25) in der Platte (24) dient.

10. Gestell nach Anspruch 8 oder 9, dadurch gekennzeichnet, daß mindestens in der Einschublage (61) der Platte (24) der Schlaufenschenkel (41) an der Laibungskante (45) des Durchbruchs (33) eine feste Anlage findet.

11. Gestell nach einem der Ansprüche 8 bis 10, dadurch gekennzeichnet, daß der Schlaufenschenkel (41) die Platte (40) kreuzt, geradlinig ausgebildet ist und auf der zur Anlagefläche (34) gegenüberliegenden Plattenseite im wesentlichen rechtwinklig zur Platte (24) weiterläuft (46).

12. Gestell nach einem der Ansprüche 8 bis 11, dadurch gekennzeichnet, daß in der Einschublage (61) der Platte (24) die Schlaufe (40) zwar mit einem ortsfesten Anschlag (66) im Gehäuse (23) ausgerichtet ist und, gegen die Federbelastung (32), ein axiales Eindrücken (62) des Exzenterbolzens (25) ins Gehäuse (23) blockiert, aber die Schlaufe (40) in der Ausschublage (61') der Platte (24) gegenüber dem Anschlag (66) frei ist und ein axiales Eindrücken (62) des Exzenterbolzens (25) zuläßt.

13. Gestell nach Anspruch 12, dadurch gekennzeichnet, daß zur Blockade des Exzenterbolzens (25) die Stirnfläche (47) des Schlaufenschenkels (41) dient und in Einschublage (61) der Platte (24) beim Eindrücken des Exzenterbolzens (25) auf den Anschlag (66) stößt, (vergl. Fig. 7).

14. Gestell nach einem der Ansprüche 1 bis 13, dadurch gekennzeichnet, daß der Anschlag (66) für das Plattenendstück durch die eine Seitenwand (36') des Gehäuses (23) gebildet ist.

15. Gestell nach einem der Ansprüche 1 bis 14, dadurch gekennzeichnet, daß in der Ausschublage (61') der Platte (24) der Freigang des Plattenendstücks beim Eindrücken (62) des Exzenterbolzens (25) durch eine Aussparung (55) in der Seitenwand (36') des Gehäuses (23) erzeugt ist.

16. Gestell nach einem der Ansprüche 8 bis 15, dadurch gekennzeichnet, daß die Schlaufe (40) ein Flachprofil aufweist und ihre Schlaufenhöhe (57) an der Seitenwand (36') des Gehäuses (23) endet.

## Claims

1. A frame comprising bar members (10, 11) which can be releasably coupled together by a connector (20) and of which at least some (11) have undercut grooves (14) and others have a cavity (12) for receiving the connector (20) at the end,
the connector (20) comprises a housing (23) which fits in the cavity (12) , also a profiled plate (24) which is longitudinally displaceable (61, 61') in the housing between an extension position and a retraction position, and finally an eccentric pin (25) which passes through the plate (24) and which has an eccentric disc (16),
at its outer end portion (27) which projects out of the bar member the plate (24) carries a hook (22) and also has an inclined surface (28) which is guided against a contact location (29) in the housing (23) and which upon plate retraction (61) moves the hook (22) transversely (69) behind the groove wall (68) of the other bar member (11), and finally its inner plate portion (31) has a contact surface (34) for the eccentric pin (25) and also has control surfaces (35, 38) for the eccentric disc (16) for longitudinal movement (61, 61') of the plate,
wherein the eccentric pin (25) is spring-loaded (32) by way of the contact surface (34) of the inner plate portion (31) transversely to the bar member (10) and said spring loading (32) urges a pin head (15) of the eccentric pin (25), which pin head serves as a rotary handle, out of the housing (23) into a transverse bore (60) in said bar member (10),
characterised in that
a longitudinal slot (39) extends through the plate (24) from the contact surface (34) to and including the outer end (27) and produces in the plate two plate tongues (30, 30') which are disposed one above the other in the housing (23),
the two plate tongues (30, 30') have hooks (22, 22') which are directed in opposite relationship to each other on the one hand and inclined surfaces (28, 28') which extend in opposite relationship to each other on the other hand, and
the two side walls (36, 36') which are disposed opposite each other in the housing (23) have two contact locations (29, 29') which are directed towards each other for the two inclined surfaces (28, 28').

2. A frame according to claim 1 characterised in that the outer plate end portions (27, 27') of the two plate tongues (30, 30') are of identical mirror-image configuration relative to each other with respect to a longitudinal central plane (43) of the connector (20),
wherein as viewed in the extension position of the plate (24) the plate end portions (27, 27') include mutually intersecting inclined surfaces (28, 28'), in addition they have hook shanks (71, 71') which are spaced from each other substantially corresponding to the width (67) of the opening of the groove (14), and finally they have hook heads (70, 70') which substantially overlap each other in the direction (65) in which the groove (14) extends.

3. A frame according to claim 1 or claim 2 characterised in at the spring loading (32) of the contact surface (34) is produced by an integral angled strip (26) of the plate (24) which comprises spring material, the free end (77) of the strip bearing slidably against the inside surface of the one side wall (36') of the housing.

4. A frame according to claim 3 characterised in that the longitudinal slot in the plate (24) is enlarged in the inner region which is towards the contact surface (34) and serves to provide the resilient strip (26).

5. A frame according to claim 4 characterised in that the resilient strip (26) is formed on the plate (24) in the bottom (78) of the slot thereof and extends in the extension direction (61') of the plate (24).

6. A frame according to claim 1 characterised in that a longitudinal slot (39) starts from a cut-out (79) in the plate (24), which cut-out accommodates a spring strip (26), the longitudinal slot (39) extends through the plate (24) to the outer end (27) thereof and divides the plate (24) into two plate tongues (30, 30') which are disposed one above the other in the housing (23), the two plate tongues (30, 30') have two hooks (22, 22') which are directed in opposite relationship to each other and also have two inclined surfaces (28, 28') which extend in opposite relationship to each other and whose contact locations (29, 29') are at the two walls (36, 36') which are in opposite relationship in the housing (23), wherein the spring strip (26) disposed in the cut-out (79) is carried on the one-piece inner plate portion (31) and is directed with its free strip end (77) towards the two hooks (22, 22').

7. A frame according to one of claims 1 to 6 characterised in that the inner end portion (31) of the plate (24) is bent back to provide a loop (40) and forms a loop leg (41) which extends transversely to the plate (24) and which delimits the contact surface (34) of the plate (24) and serves as a rear control surface (38) for the eccentric disc (16).

8. A frame according to claim 7 characterised in that the loop (40) is closed on itself in an annular configuration and its loop leg (41) projects into a through opening (33) in the plate (24).

9. A frame according to claim 8 characterised in that the through opening (33) serves at the same time for the eccentric pin (25) to pass through the plate (24).

10. A frame according to claim 8 or claim 9 characterised in that at least in the retraction position (61) of the plate (24) the loop leg (41) is in firm contact against the inside edge (45) of the through opening (33).

11. A frame according to one of claims 8 to 10 characterised in that the loop leg (41) crosses the plate (40), is linear and extends further (46) substantially at a right angle to the plate (24) on the side of the plate which is remote from the contact surface (34).

12. A frame according to one of claims 8 to 11 characterised in that in the retraction position (61) of the plate (24) the loop (40) is admittedly aligned with a stationary abutment (66) in the housing (23) and, against the spring loading (32), blocks the eccentric pin (25) from being axially pressed (62) into the housing (23), but the loop (40) in the extension position (61') of the plate (24) is free relative to the abutment (66) and permits the eccentric pin (25) to be axially pressed in (62).

13. A frame according to claim 12 characterised in that the end face (47) of the loop leg (41) serves for blocking the eccentric pin (25) and in the retraction position (61) of the plate (24) bears against the abutment (66) when the eccentric pin (25) is pressed in (see Figure 7).

14. A frame according to one of claims 1 to 13 characterised in that the abutment (66) for the plate end portion is formed by the one side wall (36') of the housing (23).

15. A frame according to one of claims 1 to 14 characterised in that in the extension position (61') of the plate (24) the plate end portion can move when the eccentric pin (25) is pressed in (62) by virtue of a recess (55) in the side wall (36') of the housing (23).

16. A frame according to one of claims 8 to 15 characterised in that the loop (40) has a flat profile and its loop height (57) terminates at the side wall (36') of the housing (23).

## Revendications

1. Echafaudage formé de barres profilées (10, 11) qui sont agencées de façon à pouvoir être accouplées entre elles, d'une manière séparable, au moyen d'un dispositif de liaison (20) et dont au moins certaines (11) comportent des rainures (14) en contre-dépouille et d'autres comportent une cavité (12) servant à recevoir par sa partie frontale le dispositif de liaison (20), échafaudage dans lequel :
- le dispositif de liaison (20) est constitué d'un boîtier (23) s'emboîtant dans la cavité (12), en outre d'une plaque profilée (24), mobile en translation longitudinale (61, 61') dans ce boîtier entre une position déployée et une position rétractée, et enfin d'un verrou à excentrique (25) qui traverse la plaque (24) et comporte un disque excentré (16),
- la plaque (24) porte un crochet (22), situé à sa partie extrême extérieure (27) qui fait saillie hors de la barre profilée, et comporte en outre une surface inclinée (28) qui est guidée dans le boîtier (23) contre un emplacement de contact (29) et qui, lors du mouvement (61) de rétraction de la plaque, déplace transversalement (69) le crochet (22), derrière la paroi (68) de la rainure de l'autre barre profilée (11), et la section intérieure (31) de la plaque comporte enfin à la fois une surface (34) d'appui pour le verrou à excentrique (25) et des surfaces de commande (35, 38) associées au disque excentré (16) pour assurer le déplacement longitudinal (61, 61') de la plaque,
- le verrou à excentrique (25) étant soumis, par la surface d'appui (34) de la section intérieure (31) de la plaque, à une sollicitation élastique (32) transversalement à la barre profilée (10) et cette sollicitation élastique (32) faisant saillir, hors du boîtier (23) et dans un perçage transversal (60) de cette barre profilée (10), la tête (15) du verrou à excentrique (25) qui sert de moyen de manoeuvre en rotation,
caractérisé :
- en ce qu'une fente longitudinale (39) est ménagée dans la plaque (24), de la surface d'appui (34) à, et y compris, l'extrémité extérieure (27), en formant dans la plaque deux pattes (30, 30') situées l'une au-dessus de l'autre dans le boîtier (23),
- en ce que les deux pattes (30, 30') de la plaque comprennent d'une part des crochets (22, 22') orientés dans des sens opposés et comportent d'autre part des surfaces inclinées (28, 28') à sens d'inclinaison opposés et
- en ce que les deux parois latérales (36, 36') qui se font face dans le boîtier (23) comportent deux emplacements (29, 29') qui se font face et au contact desquels peuvent venir les deux surfaces inclinées (28, 28').

2. Echafaudage suivant la revendication 1, caractérisé en ce que les parties extrêmes extérieures (27, 27') des deux pattes (30, 30') de la plaque sont symétriques par rapport à un plan médian longitudinal (43) du dispositif de liaison (20),
ces parties extrêmes (27, 27') de la plaque comprenant successivement, dans la position déployée de la plaque (24), des surfaces inclinées (28, 28') qui se croisent, en outre des tiges de crochet (71, 71'), espacées d'une distance correspondant pratiquement à la largeur (67) de l'ouverture libre de la rainure (14), et enfin des têtes de crochet (70, 70') se recouvrant pratiquement dans la direction (65) selon laquelle la rainure (14) s'étend.

3. Echafaudage suivant la revendication 1 ou 2, caractérisé en ce que la sollicitation élastique (32) exercée par la surface d'appui (34) est produite par une bande coudée (26) qui est venue d'une pièce avec la plaque (24), laquelle est en un matériau élastique, et dont l'extrémité libre (77) est en appui glissant contre la surface intérieure de l'une (36') des parois latérales du boîtier.

4. Echafaudage suivant la revendication 3, caractérisé en ce que la fente longitudinale de la plaque (24) est élargie (79) dans la zone intérieure située du côté de la surface d'appui (34) et sert à loger la bande élastique (26).

5. Echafaudage suivant la revendication 4, caractérisé en ce que la bande élastique (26) est formée au fond (78) de la fente de la plaque (24) et s'étend selon la direction de sortie (61') de la plaque (24).

6. Echafaudage suivant la revendication 1, caractérisé en ce qu'une fente longitudinale (39) part d'une découpe (79) de la plaque (24), qui sert à loger une bande élastique (26), la fente longitudinale (39) s'étend jusqu'à l'extrémité extérieure (27) de la plaque (24) et divise la plaque (24) en deux pattes (30, 30') qui sont superposées dans le boîtier (23), et les deux pattes (30, 30') de la plaque comprennent deux crochets (22, 22') tournés en sens opposés ainsi que deux surfaces inclinées (28, 28') en sens opposés, auxquelles sont associés des emplacements de contact (29, 29') situés sur les deux parois (36, 36') qui se font face dans le boîtier (23), tandis que la bande élastique (26), qui est logée dans la découpe (79), est située sur la section intérieure (31) venue d'une pièce avec la plaque (24) et dirige son extrémité libre (77) vers les deux crochets (22, 22').

7. Echafaudage suivant l'une des revendications 1 à 6, caractérisé en ce que la partie extrême intérieure (31) de la plaque (24) revient sur elle-même en formant une boucle (40) et présente une aile de boucle (41) qui s'étend perpendiculairement à la plaque (24), qui délimite la surface d'appui (34) de cette dernière (24) et qui sert de surface arrière de commande (38) pour le disque excentré (16).

8. Echafaudage suivant la revendication 7, caractérisé en ce que la boucle (41) est fermée en anneau et en ce que son aile (41) traverse une découpe (33) de la plaque (24).

9. Echafaudage suivant la revendication 8, caractérisé en ce que la découpe (33) permet en même temps le passage du verrou à excentrique (25) à travers la plaque (24).

10. Echafaudage suivant la revendication 8 ou 9, caractérisé en ce qu'au moins dans la position rétractée (61) de la plaque (24), l'aile (41) de la boucle est en appui fixe sur le bord intérieur (45) de la découpe (33).

11. Echafaudage suivant l'une des revendications 8 à 10, caractérisé en ce que l'aile (41) de la boucle croise la plaque (40) et s'étend en ligne droite, en se continuant (46), du côté de la plaque opposé à la surface d'appui (34), d'une manière pratiquement perpendiculaire à la plaque (24).

12. Echafaudage suivant l'une des revendications 8 à 11, caractérisé en ce que, dans la position rétractée (61) de la plaque (24), la boucle (40) est située dans l'alignement d'une butée fixe (66) du boîtier (23) et empêche que le verrou à excentrique (25) soit enfoncé axialement (62) dans le boîtier (23) à l'encontre de la sollicitation élastique (32), mais en ce que, dans la position déployée (61') de la plaque (24), la boucle (40) est libre vis-à-vis de la butée (66) et autorise un enfoncement axial (62) du verrou à excentrique (25).

13. Echafaudage suivant la revendication 12, caractérisé en ce que la rive (47) de l'aile (41) de la boucle sert à immobiliser le verrou à excentrique (25) et, dans la position rétractée (61) de la plaque (24), se heurte à la butée (66) lorsqu'on enfonce le verrou à excentrique (25) (voir figure 7).

14. Echafaudage suivant l'une des revendications 1 à 13, caractérisé en ce que la butée (66) prévue pour la partie extrême de la plaque est formée par l'une (36') des parois latérales du boîtier (23).

15. Echafaudage suivant l'une des revendications 1 à 14, caractérisé en ce que, dans la position déployée (61') de la plaque (24), la liberté de déplacement de la partie extrême de la plaque, lorsqu'on enfonce (62) le verrou à excentrique (25), est fournie par un évidement (55) ménagé dans la paroi latérale (36') du boîtier (23).

16. Echafaudage suivant l'une des revendications 8 à 15, caractérisé en ce que la boucle (40) a un profil plat de faible hauteur (57), se terminant à l'endroit de la paroi latérale (36) du boîtier (23).
